# EUROPEAN PATENT APPLICATION

(11) **EP 1 364 570 A1**
(43) Date of publication of application: **26.11.2003**
(21) Application number: 03011005.0
(22) Date of filing: 16.05.2003
(51) Int. Cl.: A01D 34/71, B60P 1/34, A01D 90/10, E01H 1/04

(54) **Tipping bin, paricularly for special multipurpose vehicles or the like**

(30) Priority: 24.05.2002 IT PD20020134
(71) Applicant: ANTONIO CARRARO S.p.A., 35011 Campodarsego (Padova) (IT)
(72) Inventor: Martignon, Girolamo, 35010 Borgoricco(Prov.of Padova) (IT)
(74) Representative: Modiano, Guido, Dr.-Ing.

(57) **Abstract**

A tipping bin particularly suitable to be fitted to a special multipurpose vehicle or the like, comprising a supporting structure (11) with a base frame (11a) from which two uprights (11b) rise vertically on mutually opposite sides, the ends of pairs of linkages (13) being pivoted to the uprights, the opposite ends of the linkages being pivoted, so as to form respective articulated quadrilaterals, to corresponding arms (14) that extend upward and are arranged at the sides of the bin (10), which is rotatably connected to them. A hydraulic actuator (17) is provided for each one of the arms (14); one end of the actuator is rotatably coupled to the base (11a) and the opposite end is rotatably coupled to the bin (10). Means for locking the movement of the linkages (13) at a preset degree of rotation are also provided.

## Description

The present invention relates to a tipping bin particularly but not exclusively suitable to be fitted on special multipurpose vehicles or the like.

Bins are currently used to load, carry and unload waste or other residues produced for example by grass cutting, hedge trimming, dead leaf picking, et cetera.

Such bins are commonly installed on special multipurpose vehicles or the like.

The material is placed in the bins manually by the operators or is conveyed directly by a cutting device by means of an aspirator and a connecting duct.

Once carried to an unloading location, which is generally the body of a truck which acts as an accumulation unit, the material contained in the bin is unloaded by tipping the bin.

The more advanced bin models have automatic tipping by means of devices which for example substantially force combined upward and horizontal translational motions so as to move them out of the corresponding edges of the supporting surfaces that are rigidly coupled to the vehicles and then force a rotation in order to perform the actual tipping and the unloading of the contained material.

The translational motions require separate actuators, and in the constructively more complicated cases it is further necessary to adopt an additional actuator to tip the bin.

This entails constructive complications and therefore very high operating, maintenance and purchasing costs, which allow adoption only by customers with substantial financial resources.

Moreover, the translational motions that must be performed before and after the tipping step extend the unloading times considerably, and this factor in some cases can be rather important, especially from an economical standpoint.

A bin has recently been devised which is the subject of EP-0726182 in the name of the same Applicant and comprises tipping means which force it to perform a first rotation about a first rotation axis that is adjacent to a supporting structure that is rigidly coupled to the vehicle, so as to make it protrude externally from the edge of the vehicle, and a second rotation about a second axis that passes through, or adjacent to, the bin and moves it from a loading configuration, in which the opening faces upward, to an unloading configuration, in which the opening faces downward.

Such bin is characterized by its constructive simplicity, which does not affect at all the precision and effectiveness of the loading and unloading mechanism of the bin, but is unable to lift the contents beyond the limit constituted by the level of the second rotation axis.

This is an important limitation, in view of the level of the edges of the bodies of many of the trucks currently in use.

The aim of the present invention is to provide a tipping bin that solves the drawback described above in conventional tipping bins by having mechanisms and components that are constructively simple and are composed of a reduced number of components.

Within this aim, an object of the present invention is to provide a tipping bin whose movement is precise and has actuation times that are not longer than those of current types.

Another object of the present invention is to provide a tipping bin that can be manufactured with known technologies.

A further object of the present invention is to provide a tipping bin whose purchase, maintenance and operating costs are competitive with respect to known types, allowing to manufacture models that can be purchased even by customers that do not have particularly significant financial resources.

A still further object of the present invention is to provide a tipping bin that is reliable and simple to use even for unspecialized operators.

This aim and these and other objects that will become better apparent hereinafter are achieved by a tipping bin particularly for special multipurpose vehicles or the like, characterized in that it comprises a supporting structure with a base frame from which two uprights rise vertically on mutually opposite sides, the ends of pairs of linkages being pivoted to said uprights, the opposite ends of said linkages being pivoted, so as to form respective articulated quadrilaterals, to corresponding arms that extend upward and are arranged at the sides of said bin, which is rotatably connected to them, a hydraulic actuator being provided for each one of said arms, one end of said actuator being rotatably coupled to said base, the other end being rotatably coupled to said bin, means for locking the movement of said linkages at a preset degree of rotation being also present.

Further characteristics and advantages of the present invention will become better apparent from the following detailed description of an embodiment thereof, illustrated only by way of non-limitative example in the accompanying drawings, wherein:

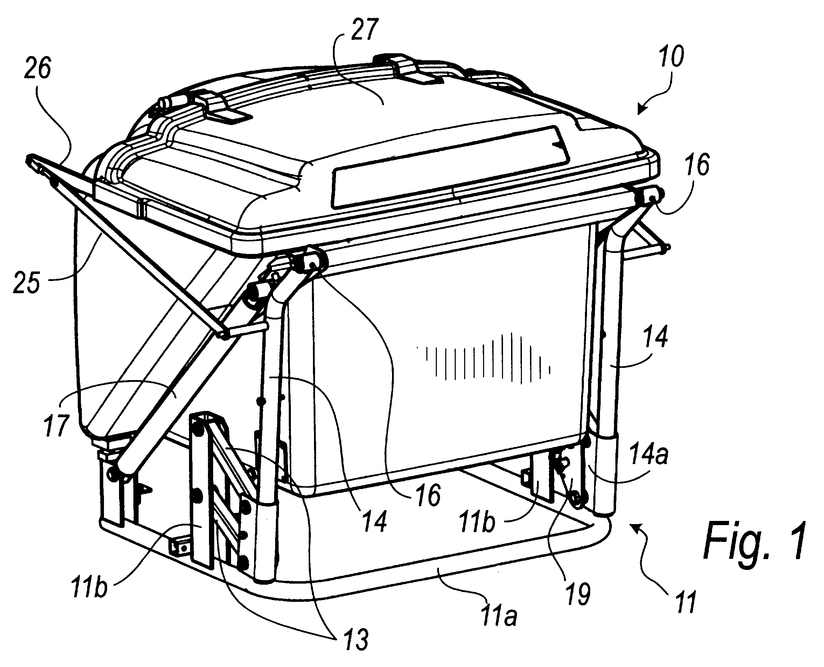

Figure 1 is a perspective view of a tipping bin according to the invention;

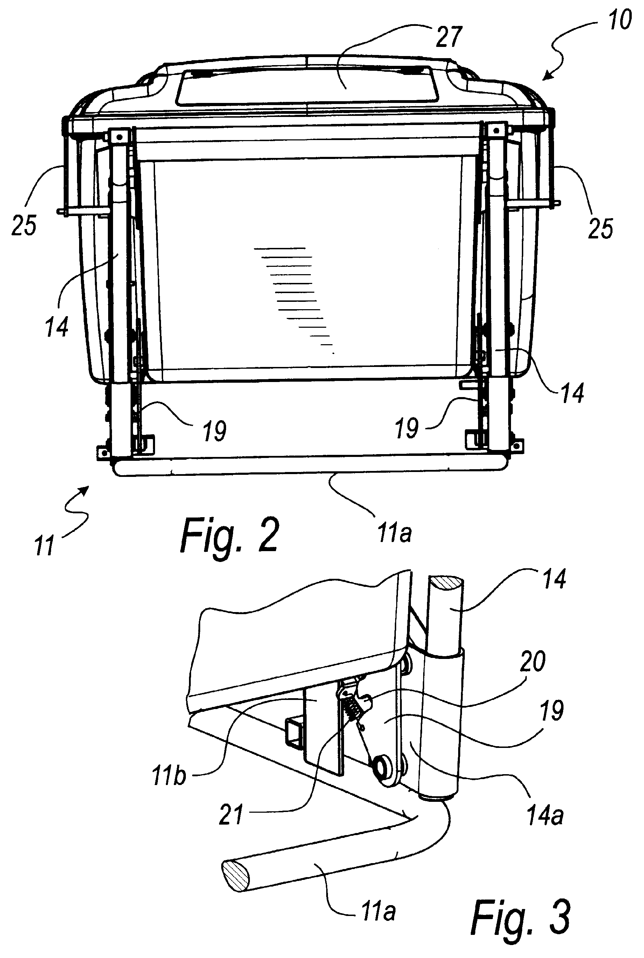

Figure 2 is a front view of the tipping bin of Figure 1;
Figure 3 is an enlarged-scale perspective view of a detail of the tipping bin of Figure 1;
Figures 4 to 7 are side views of the tipping bin of Figure 1 in respective steps of its tipping.

With reference to the figures, a tipping bin according to the invention is generally designated by the reference numeral 10.

The bin 10 is mounted on a supporting structure 11, which is in turn supported on, and rigidly coupled to, a special vehicle, which is not shown in the figures for the sake of simplicity.

The supporting structure 11 comprises a base frame 11a, which is made of metal tube having a circular cross-section, from which two uprights 11b, made of metallic profiles having a C-shaped cross-section, rise vertically on substantially central positions of mutually opposite sides.

The ends of pairs of linkages 13 are pivoted to the two uprights 11b, and the opposite ends of the linkages are pivoted, so as to form respective articulated quadrilaterals, to elements 14a that have a C-shaped cross-section and are rigidly coupled to corresponding arms 14, which also protrude upward and are arranged at the sides of the bin 10.

The linkages 13 are inclined downward starting from the uprights 11a toward the elements 14a.

Each one of the arms 14 has an upper end 16 that is rotatably connected to the bin 10 at its upper edge.

A hydraulic actuator 17 is present for each one of the arms 14 and has one end (the lower one) that is rotatably coupled to the base 11a and the opposite end (the upper one) that is rotatably coupled to a respective plate 18 that is rigidly coupled to the bin 10.

The upper end 16 of the arm 14 is also rotatably coupled to the plate 18.

At this point it should be noted that there are means for locking the movement of the linkages 13 at a preset degree of rotation; these means comprise a plate-like engagement element 19, which is articulated to the structure at the axis of articulation to the respective arm 14 of each lower linkage 13.

The engagement element 19 has a substantially triangular shape, with a vertex at the articulation axis and a slot 20 that is open toward the corresponding upright 11a and is shaped like a circular arc centered on the articulation axis.

A traction spring 21 couples the engagement element 19 to the lower linkage 13.

A tab 22 protrudes upward from the engagement element 19 and rests laterally on a first pivot 23, which is fixed to the side of the bin 10 and constitutes a retainer for the rotation of the element 19 drawn by the spring 21.

A second pivot 24 is rigidly coupled to each upper linkage 13, and is arranged so that it can enter the slot 20 in case of upward movements of the arm 14 with rotation of the linkages 13.

Locking in place is ensured by each spring 21.

A tension element 25 connects each arm 14 to an extension 26 that protrudes to the rear from the upper lid 27 of the bin 10.

The arrangement is such that by pulling the tension element 25 axially, a torque is created on a hinge 28 of the lid 27 and the lid is opened.

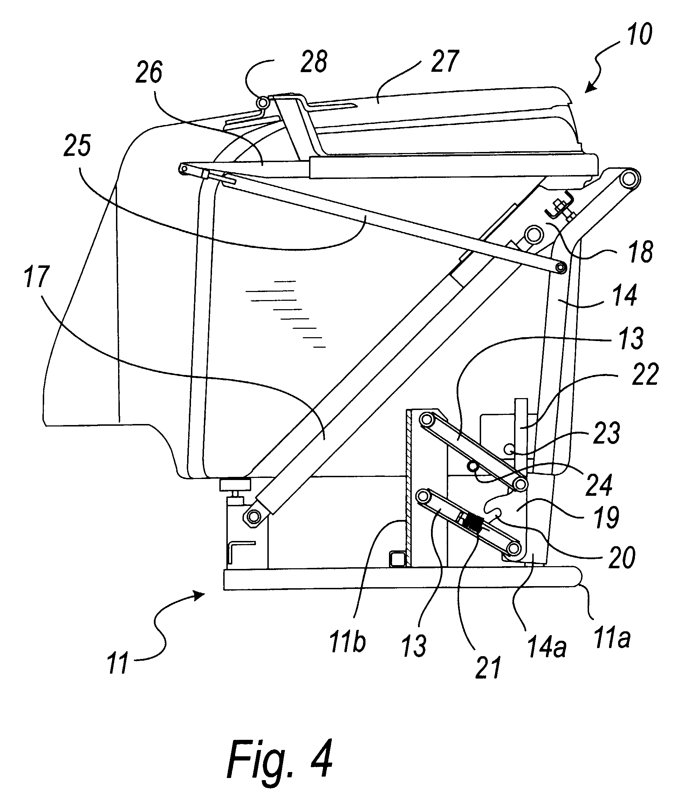

In practice, operation is as follows: starting from a position for loading the material (Figure 4), the lid 27 of the bin 10 is closed.

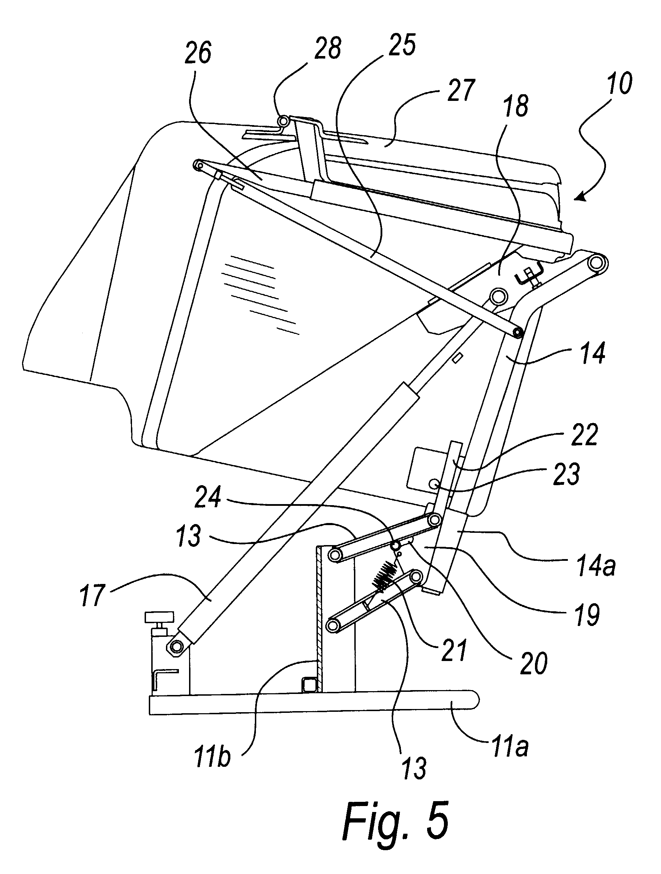

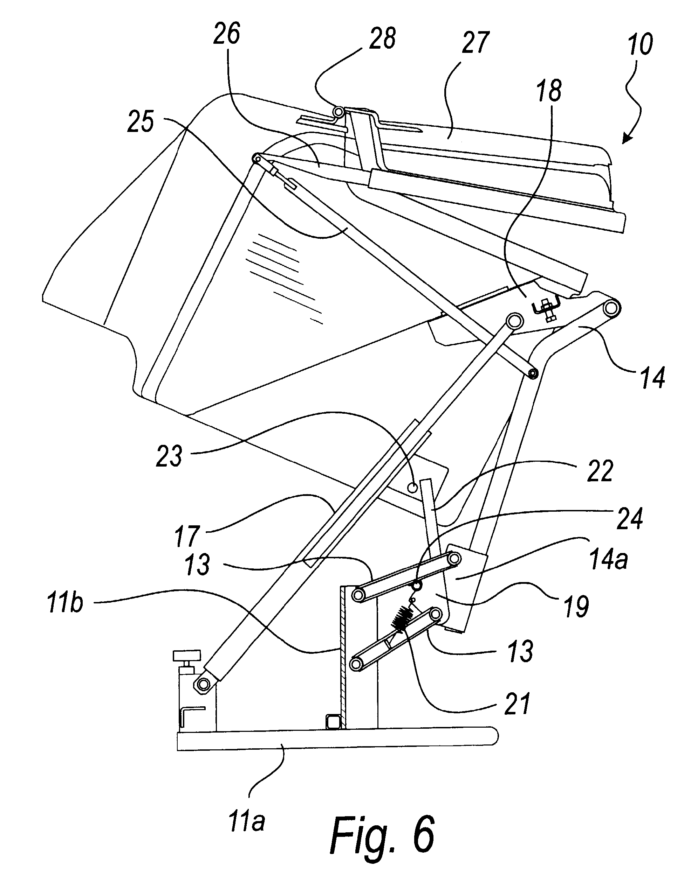

By feeding the actuators 17 (Figure 5), said actuators turn the linkages 13 and move upward the corresponding arms 14 until each engagement element 19 accommodates in its slot 20 the respective second pivot 24; the springs 21 ensure locking (Figure 6).

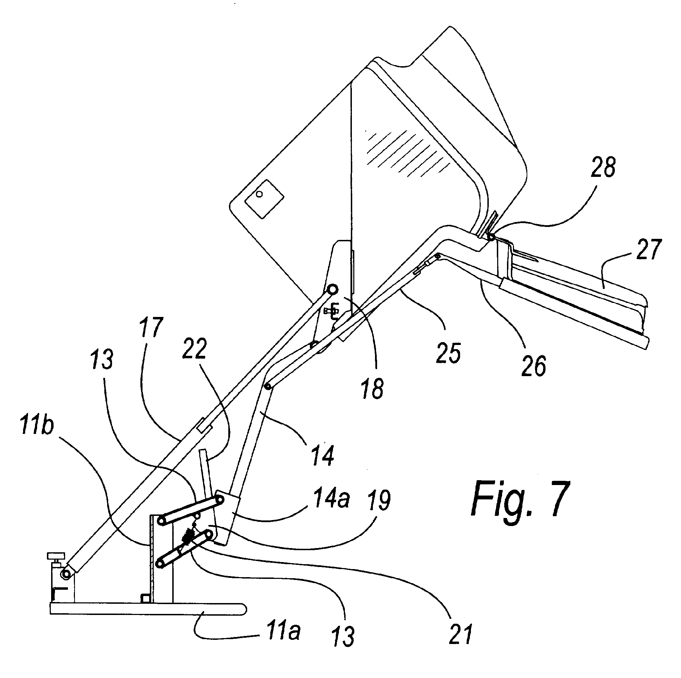

By extending the actuators 17 further (Figure 7), the bin 10 is tipped over completely and the lid 27 opens by way of the tension element 25.

By then retracting the actuators 17, the movements are reversed until return to the closed position occurs.

In practice it has been found that the intended aim and objects have been achieved.

A combined lifting and tipping of the bin has in fact been obtained with two articulated quadrilaterals and two actuators, with evident positive effects on the operating possibilities for unloading the contained material.

Attention is also called to the constructive simplicity of the invention, which however does not affect at all the precision and effectiveness of the loading and unloading mechanism of the bin.

Finally, attention is called to the overall strength of the tipping device, which requires limited maintenance, which in any case, when necessary, can be performed in a very simple manner.

Moreover, attention is called to the ease of use, since the movement is actuated automatically by the device itself, which only requires activation on the part of the operator.

The present invention is susceptible of numerous modifications and variations, all of which are within the scope of the appended claims.

The constructive details may be replaced with other technically equivalent elements.

The materials and the dimensions may be any according to requirements.

The disclosures in Italian Patent Application No. PD2002A000134 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A tipping bin particularly for special multipurpose vehicles or the like, **characterized in that** it comprises a supporting structure (11) with a base frame (11a) from which two uprights (11b) rise vertically on mutually opposite sides, the ends of pairs of linkages (13) being pivoted to said uprights, the opposite ends of said linkages being pivoted, so as to form respective articulated quadrilaterals, to corresponding arms (14) that extend upward and are arranged at the sides of said bin (10), which is rotatably connected to them, a hydraulic actuator (17) being provided for each one of said arms (14), one end of said actuator being rotatably coupled to said base (11a), the opposite end being rotatably coupled to said bin (10), means for locking the movement of said linkages (13) at a preset degree of rotation being also present.

2. The bin according to claim 1, **characterized in that** said base frame (11a) is made of metallic tube, from which said two uprights (11b), made of C-shaped metallic profiles, rise vertically in substantially central positions of mutually opposite sides.

3. The bin according to one or more of the preceding claims, **characterized in that** the ends of said pairs of linkages (13) are pivoted to said two uprights (11b), the opposite ends of said linkages being pivoted to elements (14a) that have a C-shaped cross-section and are rigidly coupled to said arms (14), which also protrude upward and are arranged at the sides of said bin (10).

4. The bin according to one or more of the preceding claims, **characterized in that** said linkages (13) are inclined downward starting from said uprights (11b) toward said elements having a C-shaped cross-section (14a).

5. The bin according to one or more of the preceding claims, **characterized in that** said hydraulic actuator (17) has its corresponding end rotatably coupled to a respective plate (18) that is rigidly coupled to the bin (10), the upper end (16) of the arm (14) being further rotatably coupled to said plate (18).

6. The bin according to one or more of the preceding claims, **characterized in that** said means for locking the movement of said linkages (13) at a preset degree of rotation comprise a plate-like engagement element (19), which is articulated to the structure at the axis of articulation to the respective arm (14) of each lower linkage (13), said engagement element (19) having a slot (20) that is open toward the corresponding upright (11b) and is shaped like a circular arc centered on the articulation axis, a traction spring (21) rigidly coupling said engagement element (19) to the lower linkage (13), a pivot (24) being rigidly coupled to each upper linkage (13) and being arranged so that it can enter said slot (20) in case of upward movements of said arm (14) with rotation of said linkages (13).

7. The bin according to one or more of the preceding claims, **characterized in that** a tab (22) protrudes upward from said engagement element (19) and rests laterally on a pivot (23) that is fixed to the side of the bin (10) and constitutes a retainer for the rotation of said engagement element (19) drawn by said spring (21).

8. The bin according to one or more of the preceding claims, **characterized in that** a tension element (25) connects each arm (14) to the tab (22) that protrudes to the rear from the upper lid (27) of the bin (10), the arrangement being such that when the tension element (25) is pulled axially a torque is produced on the hinge (28) of said lid (27) and said lid is opened.
